# EUROPEAN PATENT APPLICATION

(11) **EP 2 960 786 A2**
(43) Date of publication of application: **30.12.2015**
(21) Application number: 15169584.8
(22) Date of filing: 28.05.2015
(51) Int. Cl.: G06F 9/48

(54) **SITE MANAGEMENT PLATFORM**

(30) Priority: 28.05.2014 US 201462003557 P
(71) Applicant: Check-Net Application Ltd., 20692 Yoqneam (IL)
(72) Inventor: MAMAN, Eli, 20692 Yoqneam (IL)
(74) Representative: Gallo, Luca

(57) **Abstract**

The subject matter discloses a computer-implemented method, comprising receiving, by an application software, a request for retrieving or modifying data in a remote server; opening, a web site associated with the remote server as a result of said request; pausing the application software; receiving an event of existing the web site; and resuming the paused application software as a result of said event.

## Description

### FIELD OF THE INVENTION

The present disclosure relates to application software in general, and to virtual reality applications, in particular.

### BACKGROUND OF THE INVENTION

Virtual reality is a computerized environment that can simulate physical presence in places in the real world or imagined worlds. Virtual reality is typically implemented by a rendering engine which provides tools create interactive 3d and 2d content. An example of such rendering engine is UNITY.

*Patent application* 20100228633 to Stella Villares et al. discloses a method and system for hosting a metaverse environment within a webpage and navigating within that environment. The metaverse is established by embedding an interface in a web page, then creating an avatar when a mouse, under control of an environment user, moves over the interface. A virtual reality street, serving as the central point of the environment, and associated with a particular URL, is established and placed on the bottom of a webpage. The street is customized with a plurality of facades, and the avatar is caused, by the user, to move up or down the street. The movement of the avatar allows it to interact with the facades or activities that are built into the street. Navigation of the avatar to the end of the street causes the avatar to select from among one or more choices for selecting a next web page.

### SUMMARY OF THE INVENTION

According to some embodiments there is provided a virtual reality application which may include shops, virtual games and other facilities such as banks post office and the like. According to some embodiments one or more avatars move up and down the street, interacting with the stores and facilities such as bank and post office. The avatar may touch or hover above an icon that represents a store or a facility. As a result a web site of the store or facility is opened enabling the user who activates the application to surf the site and to purchase items in the web site. For example the user may touch an icon representing a specific bank, as a result the web site of the bank is opened and the user can access his account and perform operations on his account. In another embodiment the user may lead the avatar to enter a virtual store and to select items from the store, when the user wishes to pay he may touch an icon of a cash. As a result a web site of the store is opened and the user can purchase the items from the web site.

According to some embodiments, when the user exits the web site, the application is still activated from its latest status. For example, when the user exits a web site, the application presents the avatar in the same location as it was before entering the site and the user may continue his activities in the application.

One technical problem dealt with by the present disclosure how to accesses and/or manipulate data of one or more remote servers from a single application software. Communicating with a server from application software may utilize resources of the application software. The term application software refers herein to computer software that causes a computerized device to perform useful tasks beyond the running of the computer itself. One example of application software is mobile application. The computerized device may be Smartphone, a PC, a laptop tablet and the like.

One technical solution is to access a WEB site that is associated with the server instead of accessing the server itself, such that the communication with the server is performed by the browser and not by the application software.

However, there is a problem to continue the operating of the application software as a result of accessing a browser from the application software since the application software may not support the feature of accessing a web site. For example, an attempt of a user to access a web site from a virtual reality application causes termination of the application. The user has to re-activate the application after existing from the web site.

One technical solution to the latter problem is to use methods of integrated development environment (IDE) for accessing a browser. However software development environment such as UNITY and the integrated development environment cannot communicate directly. In some embodiments, the communication is perform via a communication channel that translates the code of the application software to a common lower level languish such as "C". The communication channel may be implemented as Plug - In.

The term **integrated development environment (IDE)** refers herein to environment that provides comprehensive facilities for software development. An IDE normally consists of a source code editor, build automation tools and a debugger. The IDE is typically adapted for a specific operating system. An example of IDE is X-code for Apple.

One exemplary embodiment of the disclosed subject matter is a computer-implemented method, comprising: at a computerized device; the computerized device having one or more processors and memory, within an application software, receiving a request for retrieving or modifying data in a server; and within the application software opening a web site associated with the server as a result of the request. According to some embodiments the method further comprising: pausing the application software as a result of the request; receiving an event of existing the web site; and resuming the application software as a result of the event. According to some embodiment the computerized device may be a Smartphone, a PC, a laptop or a tablet. According to some embodiment the request being received as a result of selecting an icon associated with the site. According to some embodiment the application software is a mobile application. According to some embodiment the method further comprising utilizing a communication channel for calling a method of integrated development environment for the opening the web site.

### THE BRIEF DESCRIPTION OF THE SEVERAL VIEWS OF THE DRAWINGS

The present disclosed subject matter will be understood and appreciated more fully from the following detailed description taken in conjunction with the drawings in which corresponding or like numerals or characters indicate corresponding or like components. Unless indicated otherwise, the drawings provide exemplary embodiments or aspects of the disclosure and do not limit the scope of the disclosure. In the drawings:
Fig. 1 shows a block diagram of a site manager platform, in accordance with some exemplary embodiments of the subject matter;
Figs. 2a and 2b show a flowchart diagram of a method for handling site manager platform, in accordance with some exemplary embodiments of the disclosed subject matter;
Fig 3. illustrates an exemplary screen of the site manager platform; and
Figs 4a 4b and 4c illustrate exemplary screens depicting an avatar entering a shop of the site manager platform.

### DETAILED DESCRIPTION

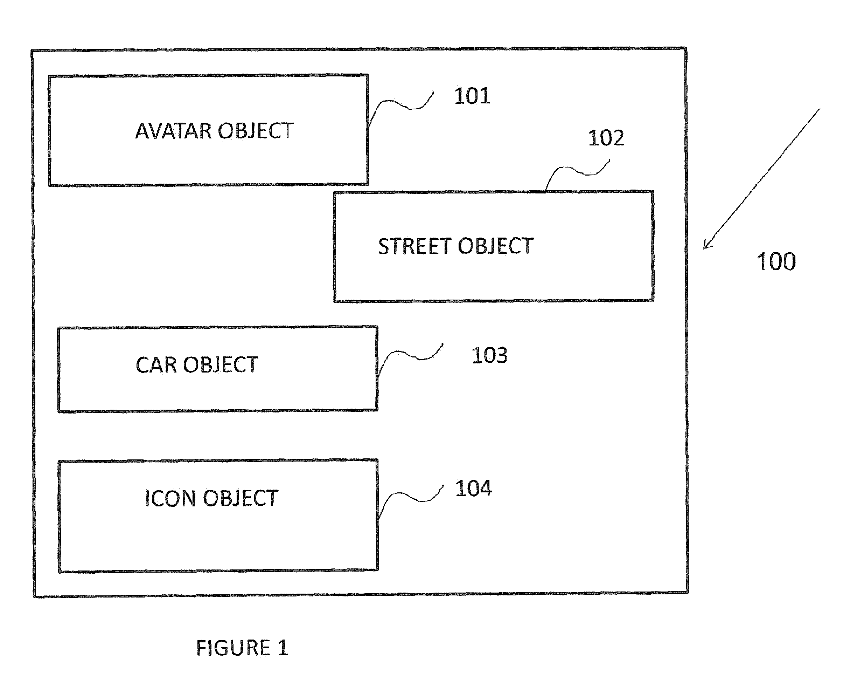

Fig. 1 shows a block diagram of a site manager platform, in accordance with some exemplary embodiments of the subject matter.

Site manager platform 100 includes an avatar object 101, a street object 102, a car object 103 and an icon object 104.

The avatar object 101 includes command field and location field. The command field receives command from the user for activating the avatar. Such command may be moving the avatar in a certain direction, rotating the avatar and selecting an icon. The location field includes the current location of the avatar on the screen.

The street object 102 includes a name filed.

The car object 103 includes command field and location field. The command field receives command from the user for activating the car. The location field includes the current location of the car on the screen.

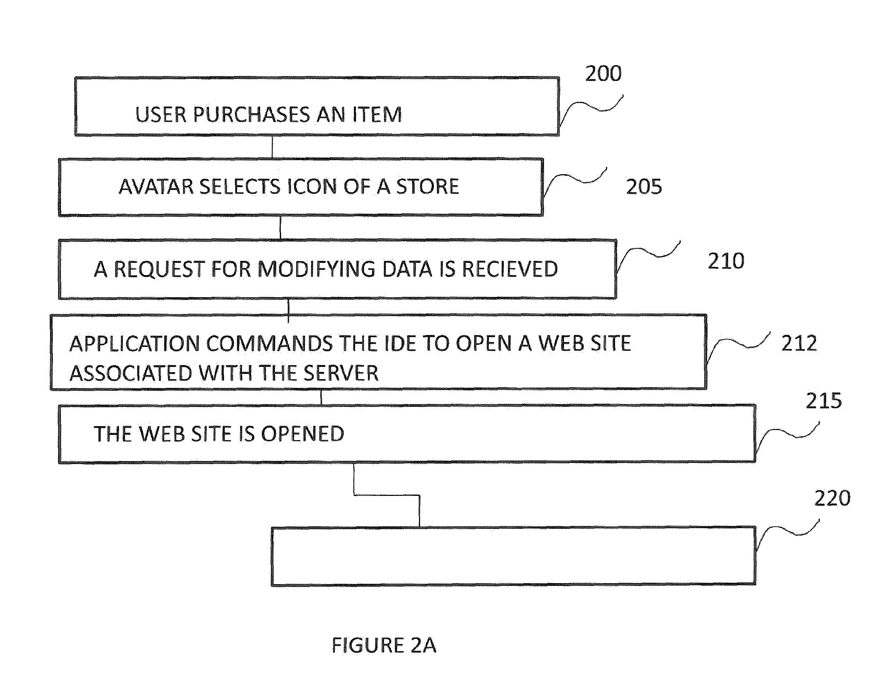

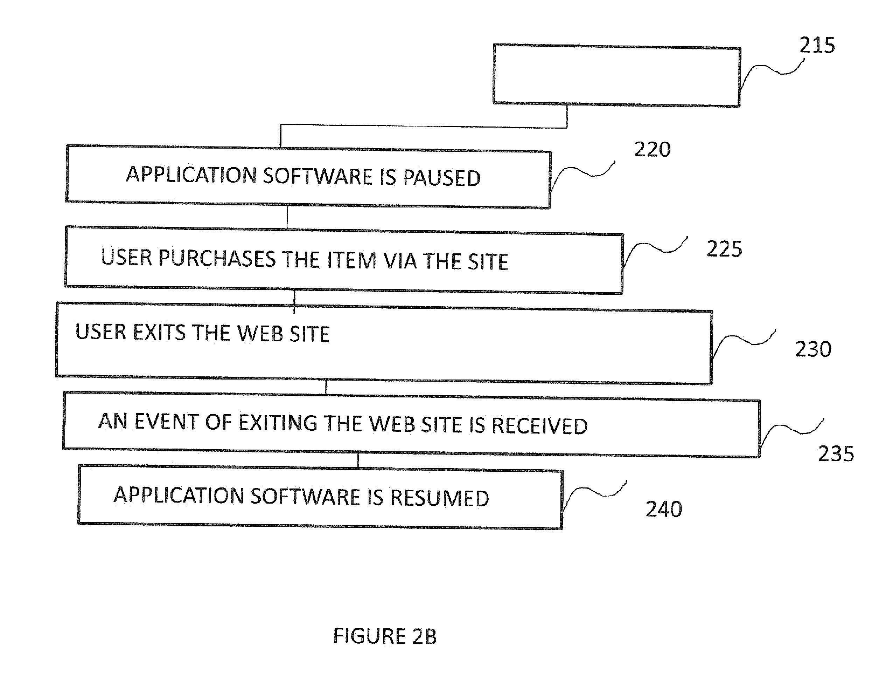

The icon object 104 includes an activation method and an address of the associated site. The activation method is activated as a result of selecting an icon by the user. The activation method opens the associated site, pauses the application software as a result of receiving an event of selecting an icon and resumes the application software as a result of receiving an event of existing the associated site. The operation of the activation method is explained in greater details in Figs. 2a and 2b.

Figs. 2a and 2b show a flowchart diagram of a method for handling site manager platform, in accordance with some exemplary embodiments of the disclosed subject matter. The site manager platform facilitates the integrating of sites with application software. In some embodiment the application software is a mobile application. The application software may be implemented by Unity.

Referring now to the drawing:
At 200 the user decides to purchase items in a store via the application. Purchasing the item via the application may be done by retrieving or modifying data in a remote server that is associated with the store. Such data may be related to the price of the item, the characteristic of the item the inventory of the item and the like.
At 205, the user selects a store. The selecting of the store may be done by direct an avatar to select an icon of a store or by selecting the store by the user. Selecting the store by the user can be done, for example by touch the icon of the store or by hovering above the icon of the store.
At 210, a request for retrieving or modifying data is received by the application software. The request may include the address of the web site of the store.
At 212 the application software utilizes a communication channel for commanding the integrated development environment to open the web site. For example, a plug in may be used for calling an XCODE method from UNITY environment. Since UNITY and XCODE cannot communicate directly, the plug in translates the code of calling the method to a common lower level language such as "C" for enabling the communication between the two environments.
At 215, the web site associated with the remote server of the store is opened by the application software.
At 220, the application software is paused.
At 225, the user surfs in the site and purchases the item.
At 230, the user exits the web site.
At 235, an event of exiting the web site is received.
At 240 the application software is resumed and the user continues his navigations in the application.

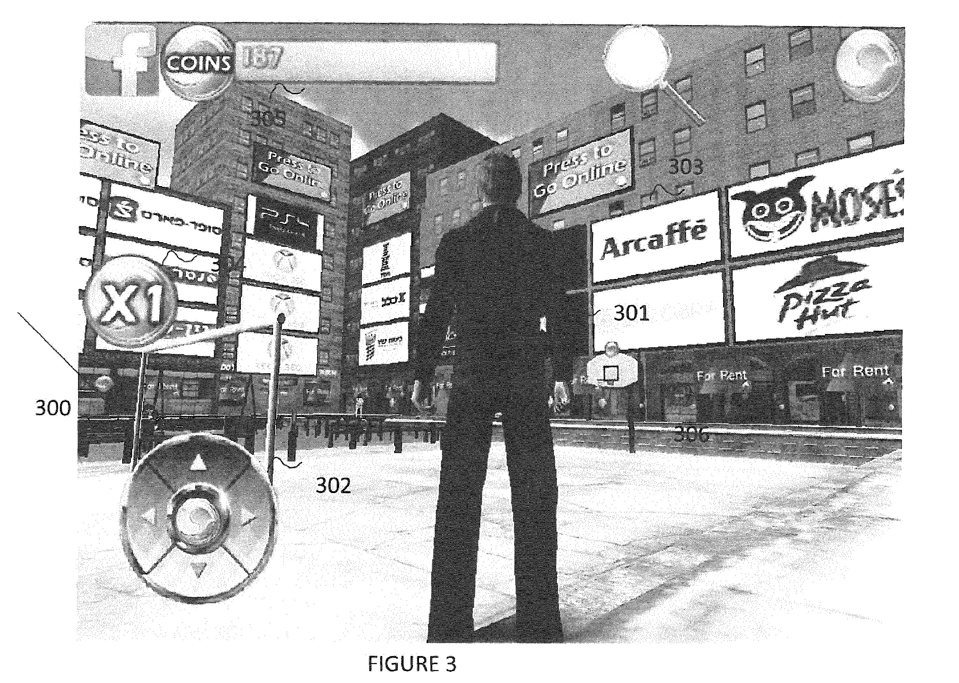

Fig 3. illustrates an exemplary screen of the site manager platform. Site manager platform 300 includes an avatar 301,a curser 302, a velocity icon 304, coins icon 305 a plurality of store icons including an icon of Arc café 303 and spots for rent 306.

The avatar 301 can move in the virtual 3d space, the movement of the avatar 301 may be controlled by the curser 302 and the velocity icon 304. The avatar may enter an online shop such as Arc café 303 for purchasing item in the site of the online shop. A retailer or a service provider may purchase a spot for rent 306 for enabling the user to purchase items or services via a site of the retailer or the service provider.

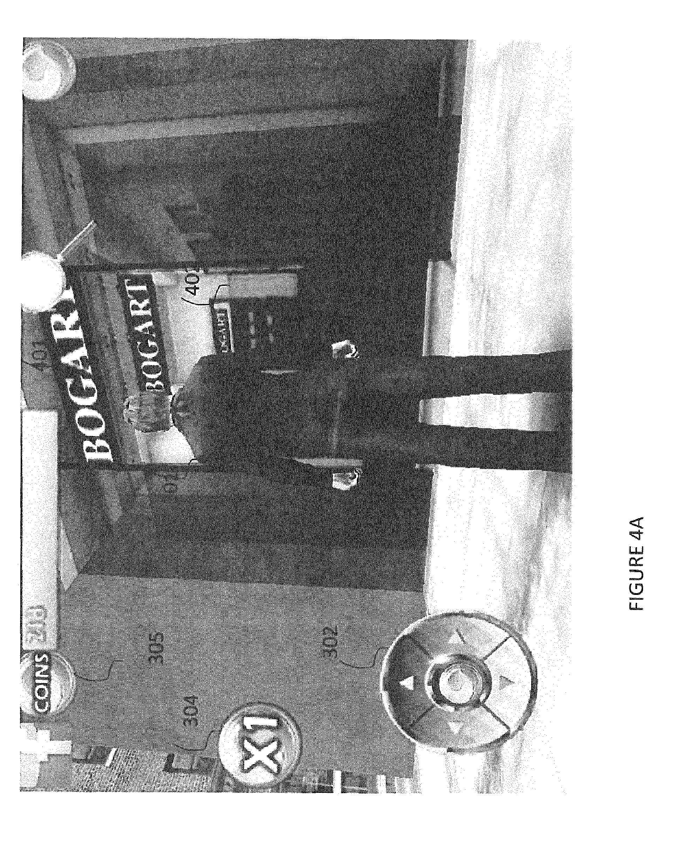

Figs 4a 4b and 4c illustrate exemplary screens depicting an avatar entering a shop of the site manager platform.

Figure 4a illustrates the avatar 301 facing an icon of BUGAT shop 401. While facing the icon 401, the avatar 301 can see the interior of the shop 402. The curser 302, the velocity icon 304 and the coins icon 305 are also displayed.

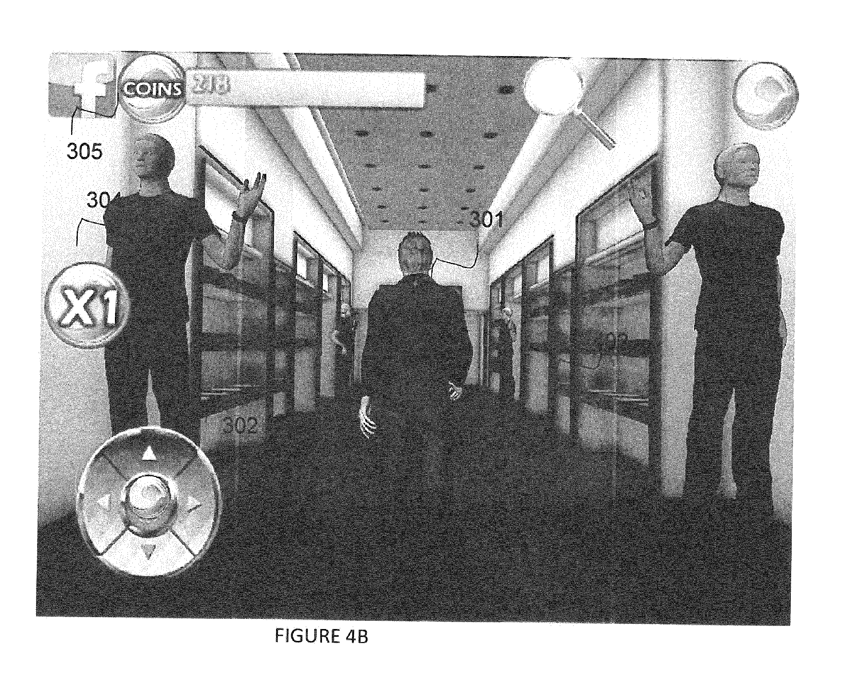

Figure 4b illustrate the avatar 301 entering the shop 402. The curser 302, the velocity icon 304 and the coins icon 305 are also displayed.

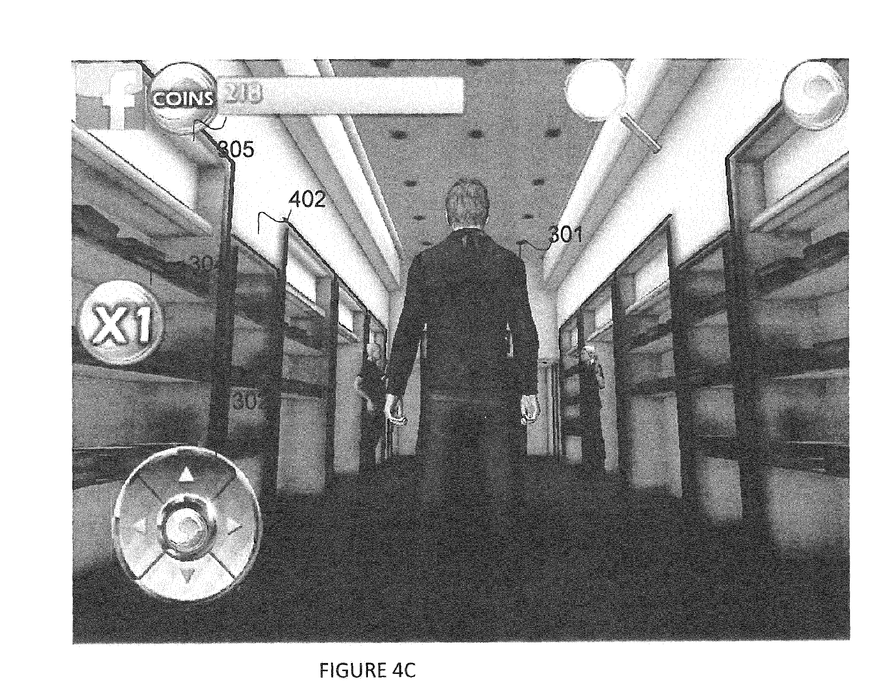

Figure 4c illustrates the avatar 301 inside the shop 402. The user 301 may purchase items in the store by entering the site of the store. Entering the site of the store may be done, for example by clicking on one of the items in the store. When the user finishes the purchasing he exits the site and returns back to the same state in the platform. For example if the last position of the avatar before entering the site is as depict in figure 4c, then when the user exists from the site, the position of the avatar 101 will be the same position that is depict in figure 4c. Also the number of coins 305 the velocity 304 and the curser 302 will have the same value as before entering the online shop. The user may now lead theavatar to another online shop. The curser 302, the velocity icon 304 and the coins icon 305 are also displayed.

The flowchart and block diagrams in the Figures illustrate the architecture, functionality, and operation of possible implementations of systems, methods and application software products according to various embodiments of the present invention. In this regard, each block in the flowchart or block diagrams may represent a module, segment, or portion of program code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As will be appreciated by one skilled in the art, the disclosed subject matter may be embodied as a system, method or application software product. Accordingly, the disclosed subject matter may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a application software product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CDROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, and the like. Application software code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A computer-implemented method , comprising:
within an application software opening a web site as a result of a request from a user;
pausing said application software as a result of said request; and
resuming said application software as a result of an event of exiting said web site by said user.

2. The method of claim 1, wherein said request being as a result of selecting, by said user, an icon associated with said site.

3. A computer-implemented method , comprising: at a computerized device; said computerized device having one or more processors and memory,
within an application software, receiving a request for retrieving or modifying data in a server; and
within said application software opening a web site associated with said server as a result of said request.

4. The method of claim 3 further comprising the steps of:
pausing said application software as a result of said request;
receiving an event of existing said web site; and
resuming said application software as a result of said event.

5. The method of claim 3 wherein said computerized device being one member of a group consisting of a Smartphone, a PC, a laptop and a tablet.

6. The method of claim 3, wherein said request being received as a result of selecting an icon associated with said site.

7. The method of claim 3, wherein said application software being a mobile application.

8. The method of claim 3 further comprising utilizing a communication channel for calling a method of integrated development environment for said opening said web site.

9. A application software placed on a magnetic readable media for handling access to sites within the application, the application software comprising:
a first program instruction for receiving a request for retrieving or modifying data in a server;
a second program instruction for opening a web site associated with said server as a result of said request;
a third program instruction for pausing said application software as a result of said request; and
a forth program instruction for resuming said application software as a result of an event of existing said web site;
